# EUROPÄISCHE PATENTSCHRIFT

(11) **EP 2 459 951 B1**
(45) Veröffentlichungstag und Bekanntmachung des Hinweises auf die Patenterteilung: **05.06.2013**
(21) Anmeldenummer: 10737262.5
(22) Anmeldetag: 02.07.2010
(51) Int. Cl.: F28D 7/00

(54) **WÄRMETAUSCHERVORRICHTUNG UND VERWENDUNG**
HEAT EXCHANGE DEVICE, AND USE THEREOF
DISPOSITIF ÉCHANGEUR DE CHALEUR ET UTILISATION

(30) Priorität: 30.07.2009 DE 102009035271
(43) Veröffentlichungstag der Anmeldung: 06.06.2012
(73) Patentinhaber: Uhrig Kanaltechnik GmbH, 78187 Geisingen (DE)
(72) Erfinder: UHRIG, Thomas, 78187 Geisingen (DE); GERSTMAIER, Anton, 78187 Geisingen/Gutmadingen (DE); KELLER, Gerhard, 78187 Geisingen/Gutmadingen (DE)
(74) Vertreter: Müller-Boré & Partner Patentanwälte
(86) Internationale Anmeldenummer: PCT/EP2010/004017
(87) Internationale Veröffentlichungsnummer: WO 2011/012195

(56) Entgegenhaltungen:
- WO-A1-2007/042283
- DE-A1- 19 719 311
- DE-U1-202004 018 084

## Beschreibung

Die Erfindung betrifft eine Wärmetauschervorrichtung und eine Verwendung einer Wärmetauschervorrichtung zur Ausbildung einer Wärmetauscheranordnung.

Energiegewinnung aus Abwasser durch nachträglich in eine Abwasserrohrleitung eingebaute Wärmetauschervorrichtungen ist aus dem Stand der Technik bekannt, wobei die bekannten Wärmetauschervorrichtungen aus einer Vielzahl von Elementen zusammenmontiert sind, wodurch ein erhöhter Montageaufwand zum Herstellen der Wärmetauschervorrichtung notwendig ist. Weiter sind eine Vielzahl von korrosionsgefährdeten Stellen vorhanden bzw. eine Vielzahl von Stellen, an denen sich Stoffe aus dem Abwasser an die Wärmetauschervorrichtung ablagern können.

Die Druckschrift WO 2007/042 283 A1 offenbart ein Wärmetauscherelement zum Einbau in Abwasserrohrleitungen, dessen Oberseite eine wärmeleitende Tauschfläche mit daran angeordneten Wärmetauscherkammern aufweist, das Wärmetauscherelement im Querschnitt eine Einlaufrinne und beidseits daran anschliessende Ablaufflächen aufweist und im Bereich der Einlaufrinne und der Ablaufflächen Leitungen zum Vorlauf, Rücklauf und zur Verteilung eines Wärmetauschermediums angeordnet sind, wobei der Sohlpunkt der Einlaufrinne, der untere Bereich der Leitungen und/oder die freien Ränder der Ablaufflächen als Auflager zur Anordnung des Wärmetauscherelements in der Abwasserrohrleitung ausgebildet sind. WO 2007/042 282 A1 offenbart somit eine Wärmetauschervorrichtung nach dem Oberbegriff des Anspruchs 1.

Es ist eine Aufgabe der vorliegenden Erfindung, eine Wärmetauschervorrichtung bereitzustellen, welche einfach herzustellen ist und einen verminderten Wartungsaufwand aufweist. Diese Aufgabe wird durch die Gegenstände der unabhängigen Ansprüche gelöst. Bevorzugte Ausführungsformen sind Gegenstand der abhängigen Ansprüche.

### Wärmetauschervorrichtung

Ein Aspekt der vorliegenden Erfindung betrifft eine Wärmetauschervorrichtung zum Einbringen entlang einer Längsrichtung L in eine sich entlang der Längsrichtung L erstreckende Abwasserrohrleitung mit einer Wärmetauscherwandung umfassend:
- einen ersten Wandungsabschnitt, welcher ausgelegt ist, um mit Abwasser zu kontaktieren,
- einen von dem ersten Wandungsabschnitt beabstandeten zweiten Wandungsabschnitt, welcher ausgelegt ist, um mit der Abwasserrohrleitung zu kontaktieren,
   wobei der erste Wandungsabschnitt und der zweite Wandungsabschnitt zumindest bereichsweise derart voneinander beabstandet angeordnet sind, daß zwischen dem ersten Wandungsabschnitt und dem zweiten Wandungsabschnitt eine Wärmetauscherkammer ausgebildet wird, und
- einen den ersten Wandungsabschnitt und den zweiten Wandungsabschnitt verbindenden dritten Wandungsabschnitt, welcher zumindest bereichsweise eine von einem Wärmetauschmedium durchströmbare erste Versorgungsleitung ausbildet,
   wobei die Wärmetauscherkammer hydraulisch über einen ersten Verbindungsbereich mit der ersten Versorgungsleitung verbunden ist.
- einen den ersten Wandungsabschnitt und den zweiten Wandungsabschnitt verbindenden vierten Wandungsabschnitt, welcher zumindest bereichsweise eine von einem Wärmetauschmedium durchströmbare zweite Versorgungsleitung ausbildet,
   wobei die Wärmetauscherkammer hydraulisch über einen zweiten Verbindungsbereich mit der zweiten Versorgungsleitung verbunden ist.

Vorteilhafterweise ist die erfindungsgemäße Wärmetauschervorrichtung in einfacher Weise herzustellen, da die erste und zweite Versorgungsleitung mittels der Wärmetauscherwandung, d.h. dem dritten und vierten Wandungsabschnitt der Wärmetauscherwandung, ausgebildet werden. So können zusätzliche Montagearbeiten, um die Versorgungsleitungen mit den übrigen Elementen der Wärmetauschervorrichtung zu verbinden, eingespart werden. Weiter vorteilhafterweise kann die erfindungsgemäße Wärmetauschervorrichtung materialsparend, besonders kompakt und mit einer glatten Oberfläche ausgebildet werden, so daß die Verletzungsgefahr bei den Montagearbeiten in der Abwasserrohrleitung verringert wird und die Wärmetauschervorrichtung besonders einfach zu reinigen ist.

Die erfindungsgemäße Wärmetauschervorrichtung ist ausgelegt, in eine Abwasserrohrleitung entlang einer Längsrichtung L einbringbar zu sein, wobei sich die Abwasserrohrleitung im wesentlichen entlang der Längsrichtung L erstreckt und wobei das Abwasser in der Abwasserrohrleitung im wesentlichen entlang der Längsrichtung L fließt. Für den Fall, daß die Abwasserrohrleitung einen zylindrischen Querschnitt aufweist, ist die Längsrichtung L parallel zur Zylinderachse. Die erste und zweite Versorgungsleitung erstrecken sich ebenfalls im wesentlichen entlang der Längsrichtung L.

Die erfindungsgemäße Wärmetauschervorrichtung ist ferner ausgelegt, daß das Abwasser in Kontakt, d.h. zumindest in thermischem Kontakt, mit dem ersten Wandungsabschnitt der Wärmetauscherwandung ist, welche bevorzugt aus einem wärmeleitenden starren Material, insbesondere einem korrosionsbeständigen Edelstahl, ausgebildet ist. Der thermische Kontakt bezeichnet den Übergang von Wärmeenergie aus dem Abwasser in die Wärmetauscherwandung und umgekehrt. Der Kontakt kann neben einem thermischen Kontakt insbesondere ein direktes Benetzen der Wärmetauscherwandung durch Abwasser umfassen.

An der der Abwasserseite entgegengesetzten Seite der Wärmetauschervorrichtung ist der, insbesondere starre, zweite Wandungsabschnitt angeordnet. Der zweite Wandungsabschnitt ist mit dem ersten Wandungsabschnitt unmittelbar und/oder mittelbar mittels des dritten und vierten Wandungsabschnitts verbunden. Der erste und zweite Wandungsabschnitt sind voneinander beabstandet angeordnet, so daß zwischen beiden die Wärmetauscherkammer ausgebildet ist. Bevorzugt liegt der lichte Abstand zwischen dem ersten und zweiten Wandungsabschnitt zwischen etwa 1 mm und etwa 10 mm, bevorzugt zwischen etwa 2 mm und etwa 7 mm, insbesondere etwa 5 mm.

Die Wärmetauscherkammer ist über den ersten Verbindungsbereich und die erste Versorgungsleitung mit einem Wärmetauschmedium (einem Fluid, beispielsweise Wasser) beschickbar und über den zweiten Verbindungsbereich und die zweite Versorgungsleitung entleerbar. Das heißt, die Wärmetauscherkammer ist mittels der ersten und zweiten Versorgungsleitung mit dem Äußeren hydraulisch verbindbar und ansonsten im wesentlichen fluiddicht bzw. wasserdicht gegenüber dem Äußeren, insbesondere gegenüber dem Abwasser.

Der Begriff "im wesentlichen" kann im Sinne der Erfindung eine Abweichung von einer Sollrichtung beschreiben, insbesondere eine Abweichung im Rahmen der Herstellungsgenauigkeit und/oder im Rahmen der notwendigen Genauigkeit, so daß ein Effekt beibehalten wird, wie er bei der Sollrichtung vorhanden ist. Der Begriff "im wesentlichen" kann daher bei Richtungsangaben eine Abweichung von weniger als etwa 20 Grad, weniger als etwa 10 Grad, weniger als etwa 5 Grad, bevorzugt weniger als etwa 1 Grad von einer Sollrichtung beinhalten. Der Begriff "im wesentlichen" umfaßt den Begriff "identisch", d.h. "ohne Abweichung von einer Sollrichtung sein".

Es versteht sich dabei, daß die Querschnittsausbildung der Wärmetauschervorrichtung so ausgelegt wird, daß sie an den jeweiligen Querschnitt der betreffenden Abwasserrohrleitung angepaßt wird. Um die Wärmetauschervorrichtung in die Abwasserrohrleitung einzubringen, ohne dabei die freien Enden der Abwasserrohrleitung mittels Baugruben freilegen zu müssen, sind ferner die Abmessungen der einzelnen Wärmetauschervorrichtungen so ausgebildet, daß die Wärmetauschervorrichtungen durch einen Kanaleinstieg in die Abwasserrohrleitung und dann entlang bzw. entgegen der Längsrichtung L der Abwasserrohrleitung in die Endposition gebracht werden kann.

Vorzugsweise sind der dritte Wandungsabschnitt und der vierte Wandungsabschnitt an gegenüberliegenden Endbereichen der Wärmetauschervorrichtung angeordnet. Mit anderen Worten ist der dritte Wandungsabschnitt entlang einer Breitenrichtung B, welche im wesentlichen senkrecht zur Längsrichtung L ist, beabstandet von dem vierten Wandungsabschnitt angeordnet. Vorteilhafterweise ist die Wärmetauscherwandung dann spiegelsymmetrisch ausgebildet, wobei die Breitenrichtung B senkrecht auf der Spiegelebene steht.

Vorzugsweise sind der dritte Wandungsabschnitt und/oder der vierte Wandungsabschnitt im wesentlichen als offene Zylindermantelfläche ausgebildet. Es versteht sich daß der kreisförmige Querschnitt der Zylindermantelfläche auch durch einen polygonalen Querschnitt angenähert werden kann.

Vorzugsweise weist der erste Verbindungsbereich eine erste Verbindungsöffnung und der zweite Verbindungsbereich eine zweite Verbindungsöffnung auf. Dabei kann die erste und/oder zweite Verbindungsöffnung kreisförmig, oval, rechteckig, schlitzförmig oder in anderer Gestalt ausgebildet sein.

Vorzugsweise ist die erste Verbindungsöffnung in Längsrichtung L von der zweiten Verbindungsöffnung beabstandet angeordnet. Vorteilhafterweise wird der Fließweg durch diese Anordnung verlängert, so daß das die Wärmetauscherkammer durchfließende Wärmetauschermedium über einen längeren Zeitraum in der Wärmetauscherkammer verbleibt, wodurch der thermische Kontakt mit dem Abwasser verlängert wird.

Vorzugsweise weist der erste Verbindungsbereich eine Mehrzahl von ersten Verbindungsöffnungen und der zweite Verbindungsbereich eine Mehrzahl von zweiten Verbindungsöffnungen auf. Bevorzugt ist jeder der ersten Verbindungsöffnungen eine - insbesondere genau eine - zweite Verbindungsöffnung zugeordnet.

Vorzugsweise ist die Anzahl der ersten Verbindungsöffnungen gleich der Anzahl der zweiten Verbindungsöffnungen.

Vorzugsweise ist jede der ersten Verbindungsöffnungen entlang der Längsrichtung L von einer zugeordneten zweiten Verbindungsöffnung beabstandet angeordnet. Dadurch kann ein Wärmetauschmedium entlang der Längsrichtung L auf einem möglichst langen Weg durch die Wärmetauscherkammer fließen, wodurch die Zeit, in welcher sich das Wärmetauschermedium mit dem Abwasser in thermischen Kontakt befindet, vorteilhafterweise verlängert wird.

Vorzugsweise sind der erste Wandungsabschnitt und/oder der zweite Wandungsabschnitt im wesentlichen als offene Zylindermantelfläche ausgebildet.

Vorzugsweise ist zwischen dem ersten Wandungsabschnitt und dem zweiten Wandungsabschnitt zumindest ein Beabstandungsmittel angeordnet.

Vorzugsweise ist das zumindest eine Beabstandungsmittel derart angeordnet, daß ein Fluid, welches von der ersten Verbindungsöffnung zu der zweiten zugeordneten Verbindungsöffnung fließt, quer zur Längsrichtung L mäandriert.

Mit anderen Worten können in der Wärmetauscherkammer zur weiteren Verlängerung des Fließweges und zur gleichzeitigen Stabilisierung der Wärmetauscherkammer bevorzugt ein oder mehrere Steg(e) zwischen dem ersten Wandungsabschnitt und dem zweiten Wandungsabschnitt voneinander beabstandet angeordnet sein. Die Stege fungieren dabei zum einen als Beabstandungsmittel, um den vorbestimmten lichten Abstand zwischen dem ersten Wandungsabschnitt und dem zweiten Wandungsabschnitt in der Wärmetauscherkammer einzuhalten und die Verwindungssteifheit zu erhöhen, so daß vorteilhafterweise das Material der Wärmetauscherwandung eine geringere Materialstärke aufweisen kann. Zum anderen fungieren die Stege als Schikane, so daß das Wärmetauschermedium auf dem Fließweg von der ersten Verbindungsöffnung zu der zweiten zugeordneten Verbindungsöffnung fließt, entlang der Breitenrichtung B, also quer zur Längsrichtung L, mäandriert.

Vorzugsweise sind der erste Wandungsabschnitt, der zweite Wandungsabschnitt, der dritte Wandungsabschnitt und der vierte Wandungsabschnitt zusammen einstückig ausgebildet. Insbesondere sind die vier Wandungsabschnitte aus einem Metallblech, beispielsweise aus einem Edelstahlblech, ausgebildet. Zweckmäßigerweise kann die Ausbildung der Wärmetauscherwandung durch Rollen bzw. durch Biegen des Metallbleches um die Längsrichtung L erfolgen, beispielsweise mittels einer CNC-Rollmaschine. Vorteilhafterweise lassen sich die Wärmetauscherkammer sowie die Versorgungsleitungen in einem Arbeitsschritt ausbilden, wobei sich die einzelnen Elemente bereits miteinander in der richtigen relativen Position verbunden sind.

Vorzugsweise umfaßt die Wärmetauschervorrichtung zumindest ein Schutzelement, wobei das Schutzelement mit einem Endbereich an der Wärmetauscherwandung befestigt ist und der dazu entgegengesetzte Endbereich ausgelegt ist, um die Abwasserrohrleitung zu kontaktieren.

Das Schutzelement ist bevorzugt als wasserundurchlässige Platte ausgebildet, so daß mit dem Abwasser mitgeführte Feststoffe sich vorteilhafterweise nicht zwischen der Wärmetauscherwandung und der Innenwand der Abwasserrohrleitung bzw. nicht an der dritten Versorgungsleitung festsetzen. Weiter bevorzugt kann das Schutzelement als Siebplatte bzw. Gitter ausgebildet sein, so daß Partikel mit einem vorbestimmbaren maximalen Partikeldurchmesser die Siebplatte bzw. das Gitter nicht passieren können. Vorteilhafterweise steht dem Abwasser dann mehr Platz innerhalb der Abwasserrohrleitung zur Verfügung, wobei mit dem Abwasser mitgeführte Feststoffe sich nicht festsetzen können. Besonders bevorzugt ist das Schutzelement aus einem korrosionsbeständigem Material, beispielsweise Edelstahl oder Kunststoff, ausgebildet und insbesondere mit zwei entgegengesetzte Enden an der Wärmetauscherwandung befestigt, beispielsweise durch Verschweißen.

Vorzugsweise umfaßt die Wärmetauschervorrichtung eine dritte Versorgungsleitung. Die dritte Versorgungsleitung ist notwendig, um einen Kreislauf des Wärmetauschmediums gemäß dem Tichelmann-Prinzip auszubilden. Die dritte Versorgungsleitung ist bevorzugt an der Wärmetauscherwandung befestigt, beispielsweise durch Verschweißen, Verschrauben oder ähnliches.

Vorzugsweise ist die dritte Versorgungsleitung an dem dritten Wandungsabschnitt oder an dem vierten Wandungsabschnitt angeordnet.

Vorzugsweise ist die dritte Versorgungsleitung zwischen dem Schutzelement und der Wärmetauscherwandung angeordnet. Dabei kann das Schutzelement als wasserundurchlässige Platte ausgebildet sein, wodurch das Schutzelement vorteilhafterweise verhindert, daß mit dem Abwasser mitgeführte korrosive Chemikalien die dritte Versorgungsleitung angreifen kann.

Vorzugsweise weist die Wärmetauschervorrichtung in den Endbereichen Anschlußkonfigurationen zum druckdichten und zugfesten Anschluß einer oder mehrerer weiterer Wärmetauschervorrichtungen auf. Die Endbereiche der Wärmetauschervorrichtung, insbesondere der Wärmetauscherwandung, können bevorzugt Klemm-, Steck und/oder Schraubverbindungen aufweisen, um eine feste Verbindung zwischen zwei gleichartigen Wärmetauschervorrichtungen auszubilden.

Bevorzugt sind die erste und zweite Versorgungsleitung der Wärmetauschervorrichtung jeweils mit einer ersten bzw. zweiten Versorgungsleitung der weiteren Wärmetauschervorrichtung verbunden. Dabei bilden die ersten und zweiten Versorgungsleitungen der miteinander verbundenen Wärmetauschervorrichtungen ein Teilstück einer Vorlaufleitung bzw. einer Rücklaufleitung aus. Die Druckdichtigkeit wird dabei so ausgelegt, daß der in den Vor- und Rücklaufleitungen anstehende Druck die Verbindung zwischen einzelnen Wärmetauschervorrichtungen nicht lösen kann. Die Zugfestigkeit zwischen den Wärmetauschervorrichtungen soll deshalb vorteilhafterweise hergestellt werden, um sicherzustellen, daß im Reparatur- oder Austauschfall die Möglichkeit besteht, die einzelnen, miteinander verbundenen Wärmetauschervorrichtungen, ohne daß sich diese voneinander lösen, in der Abwasserrohrleitung beispielsweise in Richtung eines Kanaleinstiegs ziehen zu können.

Vorzugsweise ist an den Endbereichen der ersten Versorgungsleitung und/oder der zweiten Versorgungsleitung und/oder der dritten Versorgungsleitung eine Muffe und/oder ein Rohrverbinder angeordnet bzw. ausgebildet. Vorteilhafterweise ist mittels der Muffe bzw. mittels des Rohrverbinders zum einen eine hydraulische Verbindung zwischen den entsprechenden Versorgungsleitungen herstellbar und zum anderen eine feste mechanische Verbindung ausbildbar.

### Verwendung

Ein Aspekt der vorliegenden Erfindung betrifft eine Verwendung zumindest einer erfindungsgemäßen Wärmetauschervorrichtung zur Ausbildung einer Wärmetauscheranordnung,
- wobei die Wärmetauschervorrichtung nachträglich in eine bestehende Abwasserrohrleitung eingeführt wird,
- wobei die erste Versorgungsleitung mit einer Vorlaufleitung verbunden wird,
- wobei die zweite Versorgungsleitung mit einer Rücklaufleitung verbunden wird und
- wobei die Vorlaufleitung und die Rücklaufleitung mit einer Wärmepumpe hydraulisch verbunden wird.

Vorzugsweise kann die Längs- bzw. Breitenerstreckung der starren Wärmetauschervorrichtung so gewählt werden, daß es durch einen oberirdischen Kanaleinstieg der betreffenden Abwasserrohrleitung einbringbar ist. Entsprechend der üblichen lichten Weite von Kanaleinstiegen soll dabei vorzugsweise eine Längs- bzw. Breitenerstreckung von etwa 80 cm, besonders bevorzugt von 62,5 cm nicht überschritten sein. Vorteilhafterweise besteht so die Möglichkeit, die einzelnen Wärmetauschervorrichtungen nachträglich in Abwasserrohrleitungen einzubringen, ohne dabei über eine Baugrube Zugang zu den Abwasserrohrleitungen schaffen zu müssen, da die einzelnen Wärmetauschervorrichtungen durch die zahlreich vorhandenen Kanaleinstiege in die Abwasserrohrleitung eingebracht werden können. Somit ist es problemlos möglich, eine oder mehrere Wärmetauschervorrichtungen durch den Kanaleinstieg einzubringen, um sie anschließend in der Abwasserrohrleitung zu verlegen. Bevorzugt werden zum Erlangen eines erforderlichen Wirkungsgrades mehrere einzelne Wärmetauschervorrichtungen in die Abwasserrohrleitung eingebracht und miteinander verbunden.

Da der äußere Durchmesser der Wärmetauschervorrichtung vorzugsweise dem Innendurchmesser der Abwasserrohrleitung entspricht, liegt die Wärmetauschervorrichtung unmittelbar und im wesentlichen spaltfrei an der Innenwand der Abwasserrohrleitung auf. Um die Wärmetauschervorrichtung lagesicher in der Abwasserrohrleitung anzuordnen, ist weiter bevorzugt zumindest bereichsweise ein Haftmittel zwischen der Wärmetauschervorrichtung und der Innenwand der Abwasserrohrleitung angeordnet. Alternativ kann/können eine, mehrere oder alle Wärmetauschervorrichtungen an der Innenwand der Abwasserrohrleitung durch ein Befestigungsmittel, beispielsweise Schrauben, Anker, Klemmverbindungen etc., befestigt werden.

Die Verwendung der vorgeschlagenen Wärmetauschervorrichtungen bietet sich insbesondere im innerstädtischen Bereich an, wo ein Aufgraben zum Erreichen der Abwasserrohrleitung im Regelfall nicht möglich ist. Jedoch sind gerade im innerstädtischen Bereich genügend Kanaleinstiege vorhanden, die ein Einbringen der Wärmetauschervorrichtungen in die Abwasserrohrleitung ermöglichen.

Es versteht sich dabei, daß in bekannter Weise die ersten und zweiten Versorgungsleitungen der einzelnen Wärmetauschervorrichtungen mit den Vorlauf- und Rücklaufleitungen verbunden sind, so daß das kalte Wärmetauschmedium von der Wärmepumpe über die Vorlaufleitung, durch die vorgenannten Wärmetauschervorrichtungen und schließlich in erwärmtem Zustand über die Rücklaufleitung zurück zur Wärmepumpe strömen kann. Bei der Konfiguration der Wärmetauscherkammern und auch der Auslegungen der Leitungen für den Vorlauf, Rücklauf und die Verteilung des Wärmetauschermediums (dritte Versorgungsleitung) kann dabei vorteilhafterweise auf das bekannte Tichelmann-System zurückgegriffen werden, um den Wirkungsgrad der Wärmetauschervorrichtungen zu optimieren.

Die vorangehende Beschreibung der Aspekte der Erfindung ist nicht auf die jeweiligen Aspekte beschränkt. Vielmehr gelten die Ausführungen zu den jeweiligen Aspekten sinngemäß für die weiteren Aspekte der Erfindung. Insbesondere gelten die Ausführungen in Hinsicht auf die Wärmetauschervorrichtung auch für die Verwendung und die Wärmetauscheranordnung bzw. bevorzugte Ausführungsformen bzw. Ausführungsvarianten hiervon.

### Figurenbeschreibung

Nachfolgend werden bevorzugte Ausführungsformen der vorliegenden Erfindung anhand begleitender Figuren beispielhaft beschrieben. Einzelne Elemente der beschriebenen Ausführungsformen sind nicht auf die jeweilige Ausführungsform beschränkt. Vielmehr können Elemente der Ausführungsformen beliebig miteinander kombiniert werden und neue Ausführungsformen dadurch erstellt werden. Es zeigt
- Figur 1:: einen Querschnitt durch eine bevorzugten Ausführungsform einer Wärmetauschervorrichtung,
- Figur 2:: eine Detailansicht des in der Figur 1 gezeigten Querschnitts,
- Figur 3:: eine Anschlußkonfiguration Verbinden zweier Wärmetauschervorrichtungen,
- Figur 4:: ein schematisches Blockschaltbild einer Wärmetauscheranordnung.

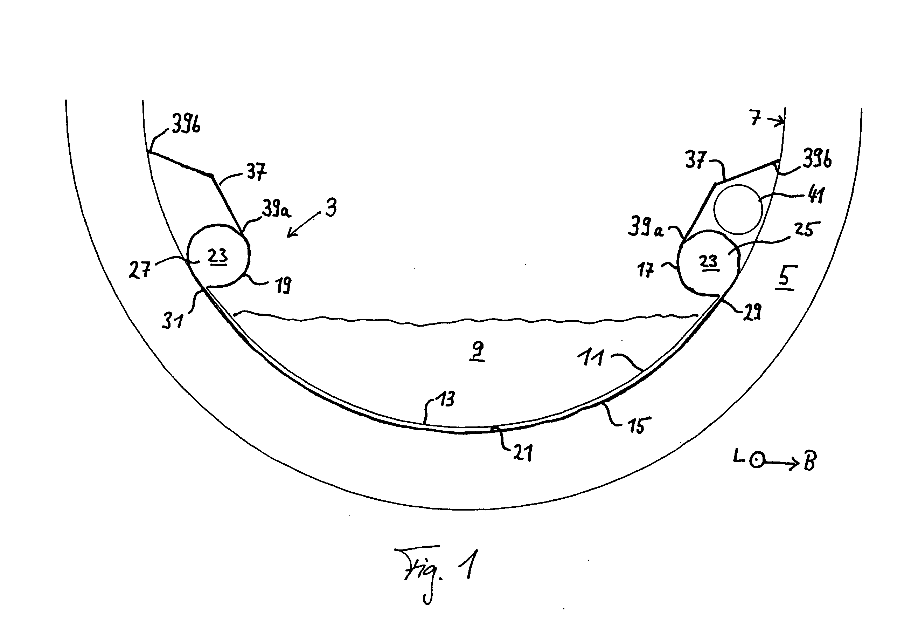

**Figur 1** zeigt einen Querschnitt durch eine Wärmetauschervorrichtung 3 in einer Abwasserrohrleitung 5. Die Wärmetauschervorrichtung 3 umfaßt eine Wärmetauscherwandung 11, welche einen ersten Wandungsabschnitt 13, einen zweiten Wandungsabschnitt 15, einen dritten Wandungsabschnitt 17 und einen vierten Wandungsabschnitt 19 aufweist.

Der zweite Wandungsabschnitt 15 ist der Innenwand 7 der Abwasserrohrleitung 5 zugewandt und liegt zumindest bereichsweise flächig an der Innenwand 13 an. Bevorzugt weist der zweite Wandungsabschnitt 15 entlang der Breitenrichtung B einen vorbestimmten Krümmungsradius R auf, um im wesentlichen spaltfrei an der Innenwand 7 der Abwasserrohrleitung 5 anzuliegen. Ein verbleibender Spalt kann zumindest bereichsweise mit einem Haftmittel verfüllt sein. Das Haftmittel kann thermisch isolierend sein, um die Wärmetauschervorrichtung 3 gegenüber dem Erdreich zu isolieren. Alternativ kann das Haftmittel thermisch leitend sein, um zusätzlich die Erdwärme mittels der Wärmetauschervorrichtung 3 zu nutzen. Bevorzugt kann das Haftmittel als Auflager der Wärmetauschervorrichtung 3 dienen. Weiter bevorzugt kann die Wärmetauschervorrichtung 3 aber auch unmittelbar an der Innenwand 7 der Abwasserrohrleitung 5 aufliegen.

Der erste Wandungsabschnitt 13 der Wärmetauscherwandung 11 ist ausgelegt, um mit dem Abwasser 9 in Kontakt zu sein, das heißt zumindest bereichsweise das Abwasser 9 thermisch zu kontaktieren bzw. vom Abwasser 9 benetzt zu sein. Der erste Wandungsabschnitt 13 ist von dem zweiten Wandungsabschnitt 15 beabstandet angeordnet, wodurch zwischen dem ersten Wandungsabschnitt 13 und dem zweiten Wandungsabschnitt 15 eine Wärmetauscherkammer 21 ausgebildet wird.

Die zumindest der erste Wandungsabschnitt 13 der Wärmetauscherwandung 11 ist aus einem starren, wärmeleitenden Material ausgebildet, so daß über den ersten Wandungsabschnitt 13 ein Austausch von Wärmeenergie zwischen dem Abwasser 9 und einem Wärmetauschmedium 23 in der Wärmetauscherkammer 21 stattfindet.

Um die Wärmeenergie des Abwassers 9 in das Wärmetauschmedium 23 zu überführen und nutzbar zu machen, muß ein thermischer Gradient zwischen dem Abwasser 9 und dem Wärmetauschmedium 23 herrschen. Mit anderen Worten darf keine thermisches Gleichgewicht zwischen beiden ausgebildet sein, sondern das Wärmetauschmedium 23 muß eine niedrigere Temperatur als das Abwasser 9 aufweisen. Aus diesem Grund wird im betriebsmäßigen Gebrauch der Wärmetauschervorrichtung 3 kontinuierlich kühles Wärmetauschmedium 23 aus einer erste Versorgungsleitung 25, auch als Vorlauf 25 bezeichenbar, über einen ersten Verbindungsbereich 29 in die Wärmetauscherkammer 21 eingeleitet. In der Wärmetauscherkammer 21 erwärmt sich das Wärmetauschmedium 23 in Abhängigkeit von der Temperatur des Abwassers 9, um im erwärmten Zustand über einen zweiten Verbindungsbereich 31 in eine zweite Versorgungsleitung 27 geleitet zu werden, die auch als Rücklauf 27 bezeichnet werden kann. Die thermische Energie kann über den Rücklauf 27 zu einem Abnehmer der im Wärmetauschmedium 23 gespeicherten thermischen Energie transportiert werden.

In der in der Figur 1 gezeigten Ausführungsform ist die erste Versorgungsleitung 25 bereichsweise, d.h. bis auf den ersten Verbindungsbereich 29 durch einen dritten Wandungsabschnitt 17 der Wärmetauscherwandung 11 ausgebildet, wobei der dritte Wandungsabschnitt 17 den ersten Wandungsabschnitt 13 und den zweiten Wandungsabschnitt 15 miteinander verbindet. Der dritte Wandungsabschnitt 17 ist im wesentlichen zylinderförmig bzw. rohrförmig ausgebildet, bis auf den Übergangsbereich zum ersten Verbindungsbereich 29, wo der dritte Wandungsabschnitt 17 von der Zylinderform bzw. Rohrform abweichen muß, um einen stetigen Anschluß zu dem ersten Wandungsabschnitt 13 und dem zweiten Wandungsabschnitt 15 aufzuweisen.

Analog zur ersten Versorgungsleitung 25 ist die zweite Versorgungsleitung 27 an dem in Breitenrichtung B entgegengesetzten Ende der Wärmetauschervorrichtung 3 ausgebildet. Das heißt, die zweite Versorgungsleitung 27 ist mit Ausnahme des zweiten Verbindungsbereichs 31 durch einen vierten Wandungsabschnitt 19 der Wärmetauscherwandung 11 ausgebildet. Der vierte Wandungsabschnitt 19 verbindet dabei ebenfalls den ersten Wandungsabschnitt 13 und den zweiten Wandungsabschnitt 15 miteinander, so daß die vier Wandungsabschnitte 13, 15, 17, 19 eine um die Längsrichtung L umlaufende geschlossene Wärmetauscherwandung 11 ausbilden. Der vierte Wandungsabschnitt 19 ist analog zum dritten Wandungsabschnitt 17 ebenfalls im wesentlichen zylinderförmig bzw. rohrförmig ausgebildet, bis auf den Übergangsbereich zum zweiten Verbindungsbereich 31.

Bevorzugt ist die Wärmetauscherwandung 11 mit den vier Wandungsabschnitten 13, 15, 17, 19 einstückig ausgebildet, insbesondere aus einem Metallblech, beispielsweise aus einem Edelstahlblech. Die Ausbildung der Wärmetauscherwandung 11 kann dabei durch ein Rollen des Metallbleches bzw. durch ein Biegen entlang der Längsrichtung L erfolgen. Vorteilhafterweise können die erforderlichen Krümmungsradien in den einzelnen Abschnitten der Wärmetauscherwandung 11 durch das Rollen des Metallblechs mittels einer CNC-Rollmaschine maßhaltig ausgebildet werden. Dadurch läßt sich die Wärmetauscherkammer 21 sowie die Versorgungsleitungen 25, 27 in einem Arbeitsschritt ausbilden, wobei sich die einzelnen Elemente vorteilhafterweise bereits in der richtigen relativen Position zueinander befinden.

Um die erste Versorgungsleitung 25 hydraulisch mit der Wärmetauscherkammer 21 zu verbinden, weist der erste Verbindungsbereich 29 zumindest eine erste Verbindungsöffnung 33 auf. Analog umfaßt der zweite Verbindungsbereich 31 zumindest eine zweite Verbindungsöffnung 35, um die Wärmetauscherkammer 21 mit der zweiten Versorgungsleitung 27 hydraulisch zu verbinden.

In Abhängigkeit von der gewünschten Fließgeschwindigkeit und dem erwarteten Temperaturgradient können die Anzahl der ersten Verbindungsöffnungen 33, die Anzahl der zweiten Verbindungsöffnungen 35 sowie deren geometrische Anordnung zueinander gewählt werden.

In einer bevorzugten Ausführungsform umfaßt der erste Verbindungsbereich 29 lediglich eine erste Verbindungsöffnung 33 und der zweite Verbindungsbereich 31 lediglich eine zweite Verbindungsöffnung 35. In diesem Fall sind die erste Verbindungsöffnung 33 und die zweite Verbindungsöffnung 35 vorzugsweise voneinander in Längsrichtung L beabstandet angeordnet. Der Fließweg wird durch diese Anordnung verlängert, so daß das Wärmetauschermedium 23 sich über einen längeren Zeitraum mit dem Abwasser 9 in mittelbaren thermischen Kontakt befindet. In der Wärmetauscherkammer 21 können zur weiteren Verlängerung des Fließweges ein oder mehrere Steg(e) (nicht gezeigt) zwischen dem ersten Wandungsabschnitt 13 und dem zweiten Wandungsabschnitt 15 voneinander beabstandet angeordnet bzw. mit diesen verbunden sein. Die Verbindung kann vorzugsweise durch Verschweißen erfolgt sein. Die Stege fungieren dabei zum einen als Beabstandungsmittel, um den lichten Abstand zwischen dem ersten Wandungsabschnitt 13 und dem zweiten Wandungsabschnitt 15 in der Wärmetauscherkammer 21 zu fixieren, und zum anderen als Schikane, so daß das Wärmetauschermedium 23, welches von der ersten Verbindungsöffnung 33 zu der zweiten zugeordneten Verbindungsöffnung 35 im wesentlichen entlang der Längsrichtung L fließt, entlang der Breitenrichtung B, also quer zur Längsrichtung L, mäandriert.

In einer weiteren bevorzugten Ausführungsform kann der erste Verbindungsbereich 29 eine Mehrzahl von ersten Verbindungsöffnungen 33 und der zweite Verbindungsbereich 31 eine Mehrzahl von zweiten Verbindungsöffnungen 35 aufweisen. Bevorzugt ist jeder der ersten Verbindungsöffnungen 33 eine zweite Verbindungsöffnung 35 zugeordnet. Besonders bevorzugt entspricht die Anzahl der ersten Verbindungsöffnungen 33 exakt der Anzahl der zweiten Verbindungsöffnungen 35. Weiter vorzugsweise ist jede der ersten Verbindungsöffnungen 33 von der zugeordneten zweiten Verbindungsöffnung 35 entlang der Längsrichtung L beabstandet angeordnet. Wie bereits oben beschrieben kann der Fließweg zwischen zwei Verbindungsöffnungen 33, 35 dadurch verlängert werden, daß ein oder mehrere Steg(e) bzw. Beabstandungsmittel (nicht gezeigt) zwischen dem ersten Wandungsabschnitt 13 und dem zweiten Wandungsabschnitt 15 voneinander beabstandet angeordnet bzw. mit diesen verbunden sind, so daß das Wärmetauschermedium 23, welches von der ersten Verbindungsöffnung 33 zu der zweiten zugeordneten Verbindungsöffnung 35 fließt, entlang der Breitenrichtung B mäandriert.

Weiter weist die in der Figur 1 gezeigte Ausführungsform der Wärmetauschervorrichtung 3 zwei Schutzelemente 37 auf. Die Schutzelemente 37 sind mit einem Endbereich 39a an der Wärmetauscherwandung 11 befestigt, beispielsweise durch eine entlang der Längsrichtung L durchgängige Schweißnaht. Insbesondere kann die Befestigung an den dritten oder vierten Wandungsabschnitt 17, 19 erfolgen. Der zu dem befestigten Endbereich entgegengesetzte, freie Endbereich 39b der Schutzelemente liegt an der Innenwand 7 der Abwasserrohrleitung 5 an und kann vorzugsweise an diesem befestigt sein. Vorzugsweise bilden die Schutzelemente 37 Ablaufflächen aus, so daß sich vorteilhafterweise keine mit dem Abwasser mitgeführten festen Bestandteile in dem verengten Bereich zwischen der Wärmetauscherwandung 11 und der Innenwand 7 der Abwasserrohrleitung 5 festsetzen können. Bevorzugt wird zwischen dem Schutzelement 37, der Wärmetauscherwandung 11 und der Innenwand 7 ein Freiraum ausgebildet, in den eine dritte Versorgungsleitung 41 angeordnet sein kann. Die dritte Versorgungsleitung 41 ist notwendig, um einen Kreislauf des Wärmetauschmediums 23 gemäß dem Tichelmann-Prinzip auszubilden, wobei die dritte Versorgungsleitung bevorzugt an der Wärmetauscherwandung 11 befestigt ist, beispielsweise durch Verschweißen, Verschrauben oder ähnliches.

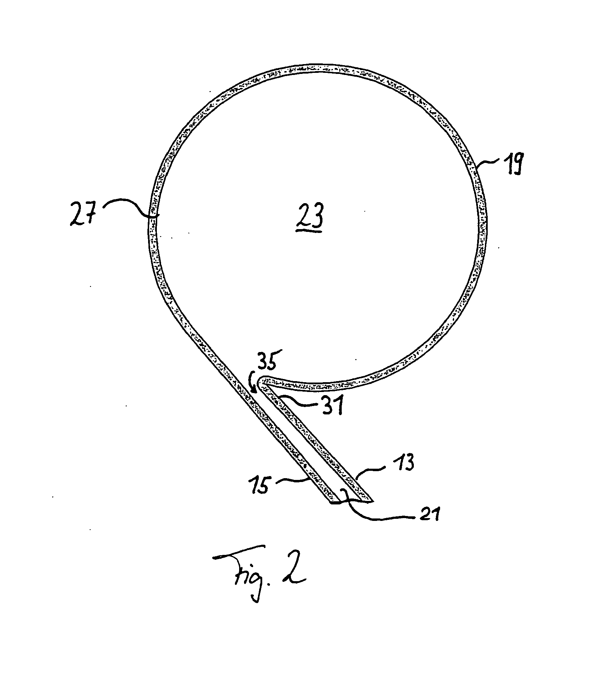

**Figur 2** zeigt eine Detailansicht der in der Figur 1 gezeigten Wärmetauschervorrichtung 3, umfassend den ersten Wandungsabschnitt 13, den zweiten Wandungsabschnitt 15 und den vierten Wandungsabschnitt 19. Der Abstand zwischen dem ersten Wandungsabschnitt 13 und dem zweiten Wandungsabschnitt 15 ist dabei im wesentlichen konstant, wobei der erste Wandungsabschnitt 13 und der zweite Wandungsabschnitt im wesentlichen als Zylindermantelteilflächen ausgebildet sind, deren Zylinderachsen im wesentlichen zusammenfallen. Mit anderen Worten ist der Krümmungsradius des ersten Wandungsabschnitts 13 kleiner als der Krümmungsradius des zweiten Wandungsabschnitts 15, wobei die Mittelpunkte der Krümmungskreise zusammenfallen. Vorteilhafterweise sind diese einfachen geometrischen Ausbildungen der einzelnen Wandungsabschnitte besonders einfach herzustellen. Lediglich die Verbindungsbereiche 29, 31 erfordern bei der Herstellung einen erhöhten Fertigungsaufwand. Im übrigen sind die zu der Figur 1 identischen Merkmale in der Figur 2 mit identischen Bezugsziffern bezeichnet.

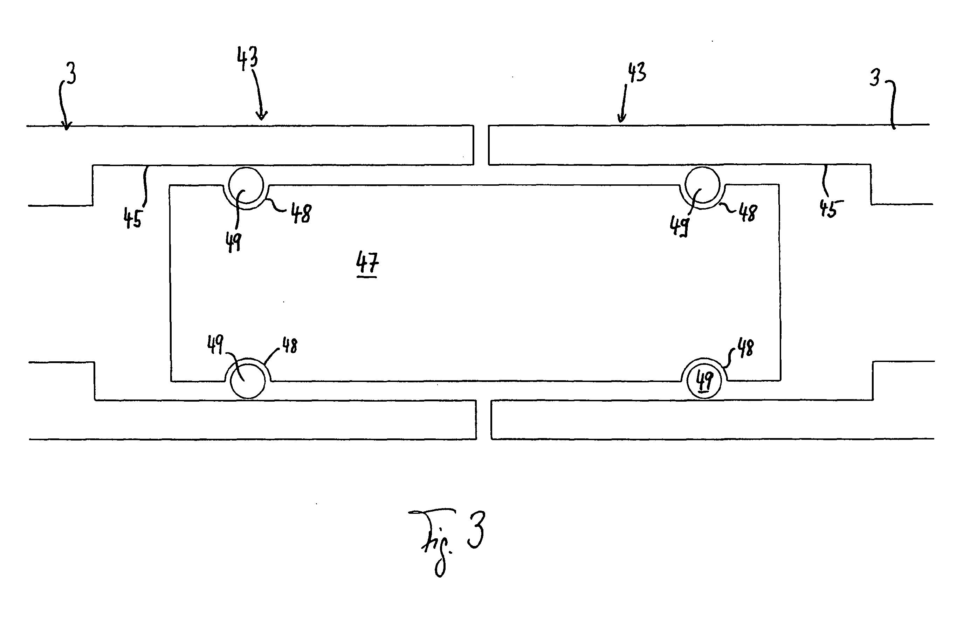

**Figur 3** zeigt eine Anschlußkonfiguration 43 zum druckdichten und zugfesten Anschluß einer oder mehrerer weiterer Wärmetauschervorrichtungen an die Wärmetauschervorrichtung 3, um zur Ausbildung einer Wärmetauscheranordnung mehrere Wärmetauschervorrichtungen miteinander verbinden zu können. Insbesondere umfaßt die erste Versorgungsleitung 25 eine Muffe 45, so daß die erste Versorgungsleitung 25 der Wärmetauschervorrichtung 3 mittels eines Muffenverbinders 47 druck- und fluiddicht mit einer Muffe 45 einer Versorgungsleitung einer weiteren Wärmetauschervorrichtung 3 verbunden werden kann. Es versteht sich, daß alternativ zu einem Muffenverbinder 47 die Muffe 45 der Wärmetauschervorrichtung 3 in druckdicht und fluiddicht mit einer komplementären Muffe (nicht gezeigt) der weiteren Wärmetauschervorrichtung 3 verbunden sein kann. Um eine zuverlässige druckdichte Verbindung herzustellen, kann die Muffe 45 und/oder der Muffenverbinder 47 und/oder die komplementäre Muffe eine umlaufende Vertiefung bzw. Nut 48 aufweisen, in welche ein Dichtungsring 49 eingesetzt sein kann. Analog kann die zweite Versorgungsleitung 27 und die dritte Versorgungsleitung 41 ebenfalls eine Muffe aufweisen.

Für den Fall, daß der dritte Wandungsabschnitt 17 und/oder der vierte Wandungsabschnitt 19 von der Zylinderform bzw. von der Rohrform derart abweichen, daß eine druckdichte Verbindung nicht gewährleistet ist, kann ein Muffenkörper an den Endbereich der durch den dritten Wandungsabschnitt 17 ausgebildeten ersten Versorgungsleitung 25 und/oder an den Endbereich der durch den vierten Wandungsabschnitt 19 ausgebildeten zweiten Versorgungsleitung 27 angeordnet werden, insbesondere durch Verschweißen oder durch Schrumpfen befestigt werden. Alternativ kann eine Muffe 45 auch durch spanende Bearbeitung des Endbereichs der ersten oder zweiten Versorgungsleitung 25, 27 ausgebildet werden.

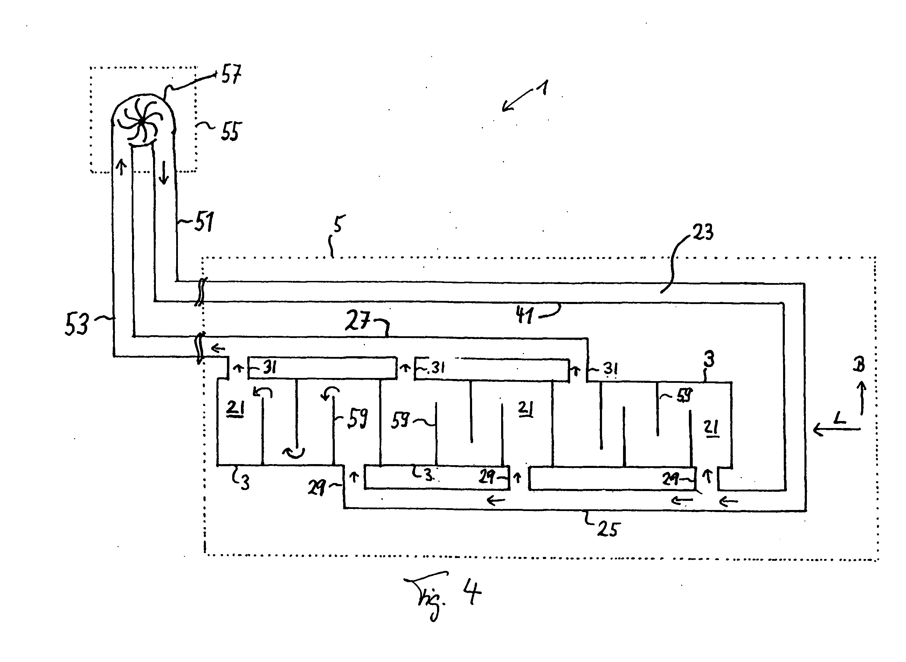

**Figur 4** zeigt ein schematisches Blockschaltbild einer Wärmetauscheranordnung 1 mit einer Wärmetauschervorrichtung 3 in einer Abwasserrohrleitung 5. Dargestellt sind eine Vorlaufleitung 51, eine Rücklaufleitung 53 und eine dritte Versorgungsleitung bzw. Verteilerleitung 41. Die Vorlaufleitung 51 ist über die dritte Versorgungsleitung 41 an die ersten Versorgungsleitungen 25 und die Rücklaufleitung 53 an den zweiten Versorgungsleitungen 27 der Wärmetauschervorrichtungen 3 angeschlossen. Bevorzugt sind die Vorlaufleitung 51 und die Rücklaufleitung 53 durch einen Kanaleinstieg (nicht gezeigt) aus der Abwasserrohrleitung heraus geführt, um an ein im Regelfall oberirdisch angeordnetes Wärmetauschersystem 55 mit einer Wärmepumpe 57 angeschlossen zu sein.

Ein Wärmetauschmedium 23 wird nach dem Prinzip von Tichelmann durch die entsprechenden Leitungen geführt. Dabei wird das kalte Wärmetauschmedium 23 von der Wärmepumpe 57 über die dritte Versorgungsleitung 41 zum von der Wärmepumpe 57 fernsten Punkt des Leitungssystems geleitet und von dort mittels der Vorlaufleitung 51 zu den ersten Versorgungsleitungen 25 der einzelnen Wärmetauschervorrichtungen 3 verteilt. Das kalte Wärmetauschmedium 23 strömt dann durch die Wärmetauscherkammern 21 der einzelnen Wärmetauschervorrichtungen 3 und schließlich in erwärmten Zustand über die zweiten Versorgungsleitungen 27 und die Rücklaufleitung 53 zurück zur Wärmepumpe 57.

Wie in der Figur 4 dargestellt, strömt das Wärmetauschmedium 23 in mäandrierender Weise durch die Wärmetauscherkammern 21, welche den Fließweg des Wärmetauschmediums 23 mittels geradliniger Beabstandungsmittel bzw. Stege bzw. Schikanen 59 verlängern.

### Bezugszeichenliste

| | |
|---|---|
| 1 | Wärmetauscheranordnung |
| 3 | Wärmetauschervorrichtung |
| 5 | Abwasserrohrleitung |
| 7 | innere Wandung der Abwasserrohrleitung 5 |
| 9 | Abwasser |
| 11 | Wärmetauscherwandung |
| 13 | erster Wandungsabschnitt |
| 15 | zweiter Wandungsabschnitt |
| 17 | dritter Wandungsabschnitt |
| 19 | vierter Wandungsabschnitt |
| 21 | Wärmetauscherkammer |
| 23 | Wärmetauschmedium |
| 25 | erste Versorgungsleitung |
| 27 | zweite Versorgungsleitung |
| 29 | erster Verbindungsbereich |
| 31 | zweiter Verbindungsbereich |
| 33 | erste Verbindungsöffnung |
| 35 | zweite Verbindungsöffnung |
| 37 | Schutzelement |
| 39a,b | Endbereiche des Schutzelementes 37 |
| 41 | dritte Versorgungsleitung bzw. Verteilerleitung |
| 43 | Anschlußkonfiguration |
| 45 | Muffe |
| 47 | Muffenverbinder |
| 48 | Nut |
| 49 | Dichtungsring |
| 51 | Vorlaufleitung |
| 53 | Rücklaufleitung |
| 55 | Wärmetauschersystem |
| 57 | Wärmepumpe |
| 59 | Steg bzw. Schikane bzw. Beabstandungsmittel |
| B | Breitenrichtung |
| L | Längsrichtung |

## Patentansprüche

1. Wärmetauschervorrichtung (3) zum Einbringen entlang einer Längsrichtung L in eine sich entlang der Längsrichtung L erstreckende Abwasserrohrleitung (5) mit einer Wärmetauscherwandung (43) umfassend:
- einen ersten Wandungsabschnitt (13), welcher ausgelegt ist, um mit Abwasser (9) zu kontaktieren,
- einen von dem ersten Wandungsabschnitt (13) beabstandeten zweiten Wandungsabschnitt (15), welcher ausgelegt ist, um mit der Abwasserrohrleitung (5) zu kontaktieren,
wobei der erste Wandungsabschnitt (13) und der zweite Wandungsabschnitt (15) zumindest bereichsweise derart voneinander beabstandet angeordnet sind, daß zwischen dem ersten Wandungsabschnitt (13) und dem zweiten Wandungsabschnitt (15) eine Wärmetauscherkammer (21) ausgebildet wird, und **dadurch gekennzeichnet, daß** die Wärmetauschervorrichtung weiter
- einen den ersten Wandungsabschnitt (13) und den zweiten Wandungsabschnitt (15) verbindenden dritten Wandungsabschnitt (17), welcher zumindest bereichsweise eine von einem Wärmetauschmedium (23) durchströmbare erste Versorgungsleitung (25) ausbildet umfasst;
wobei die Wärmetauscherkammer (21) hydraulisch über einen ersten Verbindungsbereich (29) mit der ersten Versorgungsleitung (25)
verbunden ist, und daß die Wärmekauschervorrichtung weiter
- einen den ersten Wandungsabschnitt (13) und den zweiten Wandungsabschnitt (15) verbindenden vierten Wandungsabschnitt (19), welcher zumindest bereichsweise eine von einem Wärmetauschmedium (23) durchströmbare zweite Versorgungsleitung (27) ausbildet umfasst,
wobei die Wärmetauscherkammer (21) hydraulisch über einen zweiten Verbindungsbereich (31) mit der zweiten Versorgungsleitung (27) verbunden ist.

2. Wärmetauschervorrichtung (3) nach Anspruch 1, wobei der dritte Wandungsabschnitt (17) und der vierte Wandungsabschnitt (19) an gegenüberliegenden Endbereichen der Wärmetauschervorrichtung (3) angeordnet sind.

3. Wärmetauschervorrichtung (3) nach einem der vorigen Ansprüche, wobei der dritte Wandungsabschnitt (17) und/oder der vierte Wandungsabschnitt (19) im wesentlichen als offene Zylindermantelfläche ausgebildet sind.

4. Wärmetauschervorrichtung (3) nach einem der vorigen Ansprüche, wobei der erste Verbindungsbereich (29) eine erste Verbindungsöffnung (33) und der zweite Verbindungsbereich (31) eine zweite Verbindungsöffnung (35) aufweist, und
wobei die erste Verbindungsöffnung (33) bevorzugt in Längsrichtung L von der zweiten Verbindungsöffnung (35) beabstandet angeordnet ist.

5. Wärmetauschervorrichtung (3) nach einem der vorigen Ansprüche, wobei der erste Verbindungsbereich (29) eine Mehrzahl von ersten Verbindungsöffnungen (33) und der zweite Verbindungsbereich (31) eine Mehrzahl von zweiten Verbindungsöffnungen (35) aufweist.

6. Wärmetauschervorrichtung (3) nach Anspruch 5, wobei die Anzahl der ersten Verbindungsöffnungen (33) gleich der Anzahl der zweiten Verbindungsöffnungen (35) ist und
wobei jede der ersten Verbindungsöffnungen (33) bevorzugt entlang der Längsrichtung L von einer zugeordneten zweiten Verbindungsöffnung (35) beabstandet angeordnet ist.

7. Wärmetauschervorrichtung (3) nach einem der vorigen Ansprüche, wobei der erste Wandungsabschnitt (13) und/oder der zweite Wandungsabschnitt (15) im wesentlichen als offene Zylindermantelfläche ausgebildet sind.

8. Wärmetauschervorrichtung (3) nach einem der vorigen Ansprüche, wobei zwischen dem ersten Wandungsabschnitt (13) und dem zweiten Wandungsabschnitt (15) zumindest ein Beabstandungsmittel (59) angeordnet ist und
wobei das zumindest eine Beabstandungsmittel (59) bevorzugt derart angeordnet ist, daß ein Fluid, welches von der ersten Verbindungsöffnung (33) zu der zweiten zugeordneten Verbindungsöffnung (35) fließt, quer zur Längsrichtung (L) mäandriert.

9. Wärmetauschervorrichtung (3) nach einem der vorigen Ansprüche, wobei der erste Wandungsabschnitt (13), der zweite Wandungsabschnitt (15), der dritte Wandungsabschnitt (17) und der vierte Wandungsabschnitt (19) zusammen einstückig ausgebildet sind.

10. Wärmetauschervorrichtung (3) nach einem der vorigen Ansprüche, weiter umfassend zumindest ein Schutzelement (37), wobei das Schutzelement (37) mit einem Endbereich (39a) an der Wärmetauscherwandung (11) befestigt ist und der dazu entgegengesetzte Endbereich (39b) ausgelegt ist, um die Abwasserrohrleitung (5) zu kontaktieren.

11. Wärmetauschervorrichtung (3) nach einem der vorigen Ansprüche, weiter umfassend eine dritte Versorgungsleitung (41),
wobei die dritte Versorgungsleitung (41) bevorzugt an dem dritten Wandungsabschnitt (17) oder an dem vierten Wandungsabschnitt (19) angeordnet ist.

12. Wärmetauschervorrichtung (3) nach Anspruch 11, wobei die dritte Versorgungsleitung (41) zwischen dem Schutzelement (37) und der Wärmetauscherwandung (11) angeordnet ist.

13. Wärmetauschervorrichtung (3) nach einem der vorherigen Ansprüche, wobei die Wärmetauschervorrichtung (3) in den Endbereichen Anschlußkonfigurationen (59) zum druckdichten und zugfesten Anschluß einer oder mehrerer weiterer Wärmetauschervorrichtungen (3) aufweist.

14. Wärmetauschervorrichtung (3) nach einem der vorherigen Ansprüche, wobei an den Endbereichen der ersten Versorgungsleitung (25) und/oder der zweiten Versorgungsleitung (27) und/oder der dritten Versorgungsleitung (41) eine Muffe (45) ausgebildet ist.

15. Verwendung zumindest einer Wärmetauschervorrichtung (3) nach einem der Ansprüche 1 bis 14 zur Ausbildung einer Wärmetauscheranordnung (1),
- wobei die Wärmetauschervorrichtung (3) nachträglich in eine bestehende Abwasserrohrleitung (5) eingeführt wird,
- wobei die erste Versorgungsleitung (25) mit einer Vorlaufleitung (51) verbunden wird,
- wobei die zweite Versorgungsleitung (27) mit einer Rücklaufleitung (53) verbunden wird und
- wobei die Vorlaufleitung (51) und die Rücklaufleitung (53) mit einer Wärmepumpe (57) hydraulisch verbunden wird.

## Claims

1. Heat exchanger device (3) for longitudinal L insertion into a sewer pipe (5) extending in the longitudinal direction L having a heat exchanger wall (43) comprising:
- a first wall portion (13) designed to contact sewage (9),
- a second wall portion (15) spaced apart from the first wall portion (13) designed to contact the sewer pipe (5),
wherein the first wall portion (13) and the second wall portion (15) are arranged spaced apart from each other at least in some areas such that there is formed a heat exchanger chamber between the first wall portion (13) and the second wall portion (15), and **characterized in that** the heat exchanger device further
- comprises a third wall portion (17) connecting the first wall portion (13) and the second wall portion (15), forming a first supply line (25) that a heat exchange medium (23) can flow through at least in some areas,
wherein the heat exchanger chamber (21) is hydraulically connected to the first supply line (25) through a first coupling area (29), and that the heat exchanger device further
- comprises a fourth wall portion (19) connecting the first wall portion (13) and the second wall portion (15), forming a second supply line (27) that a heat exchange medium (23) can flow through at least in some areas,
wherein the heat exchanger chamber (21) is hydraulically connected to the second supply line (27) through a second coupling area (31).

2. Heat exchanger device (3) according to claim 1, wherein the third wall portion (17) and the fourth wall portion (19) are arranged at opposite end areas of the heat exchanger device (3).

3. Heat exchanger device (3) according to any of the preceding claims, wherein the third wall portion (17) and/or the fourth wall portion (19) are essentially formed as open cylinder barrel surfaces.

4. Heat exchanger device (3) according to any of the preceding claims, wherein the first coupling area (29) comprises a first coupling opening (33) and the second coupling area (31) comprises a second coupling opening (35), and
wherein the first coupling opening (33) is preferably arranged spaced apart from the second coupling opening (35) in the longitudinal direction L.

5. Heat exchanger device (3) according to any of the preceding claims, wherein the first coupling area (29) comprises plural first coupling openings (33) and the second coupling area (31) comprises plural second coupling openings (35).

6. Heat exchanger device (3) according to claim 5, wherein the number of first coupling openings (33) is equal to the number of second coupling openings (35), and
wherein the first coupling openings (33) are preferably arranged spaced apart from an associated second coupling opening (35) along the longitudinal direction L.

7. Heat exchanger device (3) according to any of the preceding claims, wherein the first wall portion (13) and/or the second wall portion (15) are essentially formed as open cylinder barrel surfaces.

8. Heat exchanger device (3) according to any of the preceding claims, wherein at least one spacer means (59) is arranged between the first wall portion (13) and the second wall portion (15), and
wherein the at least one spacer means (59) is preferably arranged such that a fluid flowing to the second associated coupling opening (35) from the first coupling opening (35) is meandering across the longitudinal direction (L).

9. Heat exchanger device (3) according to any of the preceding claims, wherein the first wall portion (13), the second wall portion (15), the third wall portion (17) and the fourth wall portion (19) are formed unitarily in one body.

10. Heat exchanger device (3) according to any of the preceding claims, further comprising at least one protection member (37), wherein the protection member (37) having an end area (39a) attached to the heat exchanger wall (11) and having the end area (39a) opposed thereto designed to contact the sewer pipe (5).

11. Heat exchanger device (3) according to any of the preceding claims, further comprising a third supply line (41),
wherein the third supply line (41) is preferably arranged at the third wall portion (17) or at the fourth wall portion (19).

12. Heat exchanger device (3) according to claim 11, wherein the third supply line (41) is arranged between the protection member (37) and the heat exchanger wall (11).

13. Heat exchanger device (3) according to any of the preceding claims, wherein the heat exchanger device (3) comprises connection configurations (59) for pressure-tight and tension-proof connection of one or more additional heat exchanger devices (3) in the end areas.

14. Heat exchanger device (3) according to any of the preceding claims, wherein a sleeve (45) is formed at the end areas of the first supply line (25) and/or the second supply line (27) and/or the third supply line (41).

15. Use of at least one heat exchanger device (3) according to any of claims 1 to 14 for forming a heat exchanger arrangement (1),
- wherein the heat exchanger device (3) is later inserted into an existing sewer pipe (5),
- wherein the first supply line (25) is coupled to a feed line (51),
- wherein the second supply line (27) is coupled to a return line (53) and
- wherein the feed line (51) and the return line (53) are hydraulically connected by a heat pump (57).

## Revendications

1. Dispositif échangeur de chaleur (3) pour l'introduction le long d'une direction longitudinale L dans une conduite d'eaux usées (5) s'étendant le long de la direction longitudinale avec une paroi d'échangeur de chaleur (43) comprenant :
- une première section de paroi (13) qui est conçue pour venir en contact avec des eaux usées (9),
- une deuxième section de paroi (15) écartée de la première section de paroi (13) qui est conçue pour venir en contact avec la conduite d'eaux usées (5),
dans lequel la première section de paroi (13) et la deuxième section de paroi (15) sont disposées à l'écart l'une de l'autre au moins par région de telle sorte qu'une chambre d'échangeur de chaleur (21) est réalisée entre la première section de paroi (13) et la deuxième section de paroi (15), et **caractérisé en ce que** le dispositif échangeur de chaleur comprend en outre
- une troisième section de paroi (17) reliant la première section de paroi (13) et la deuxième section de paroi (15) qui réalise au moins par région une première conduite d'alimentation (25) pouvant être traversée par un milieu d'échange de chaleur (23),
dans lequel la chambre d'échangeur de chaleur (21) est reliée de manière hydraulique par le biais d'une première région de connexion (29) à la première conduite d'alimentation (25), et que le dispositif échangeur de chaleur comprend en outre
- une quatrième section de paroi (19) reliant la première section de paroi (13) et la deuxième section de paroi (15) qui réalise au moins par région une deuxième conduite d'alimentation (27) pouvant être traversée par un milieu d'échange de chaleur (23),
dans lequel la chambre d'échangeur de chaleur (21) est reliée de manière hydraulique par le biais d'une seconde région de connexion (31) à la deuxième conduite d'alimentation (27).

2. Dispositif échangeur de chaleur (3) selon la revendication 1, dans lequel la troisième section de paroi (17) et la quatrième section de paroi (19) sont disposées sur des régions d'extrémité opposées du dispositif échangeur de chaleur (3).

3. Dispositif échangeur de chaleur (3) selon l'une quelconque des revendications précédentes, dans lequel la troisième section de paroi (17) et/ou la quatrième section de paroi (19) sont réalisées essentiellement en tant que surface d'enveloppe cylindrique ouverte.

4. Dispositif échangeur de chaleur (3) selon l'une quelconque des revendications précédentes, dans lequel la première région de connexion (29) présente une première ouverture de connexion (33) et la seconde région de connexion (31) une seconde ouverture de connexion (35), et
dans lequel la première ouverture de connexion (33) est de préférence disposée à l'écart de la seconde ouverture de connexion (35) dans la direction longitudinale L.

5. Dispositif échangeur de chaleur (3) selon l'une quelconque des revendications précédentes, dans lequel la première région de connexion (29) présente une pluralité de premières ouvertures de connexion (33) et la seconde région de connexion (31) une pluralité de secondes ouvertures de connexion (35).

6. Dispositif échangeur de chaleur (3) selon la revendication 5, dans lequel le nombre de premières ouvertures de connexion (33) est égal au nombre de secondes ouvertures de connexion (35) et
dans lequel chacune des premières ouvertures de connexion (33) est de préférence disposée à l'écart d'une seconde ouverture de connexion associée (35) le long de la direction longitudinale L.

7. Dispositif échangeur de chaleur (3) selon l'une quelconque des revendications précédentes, dans lequel la première section de paroi (13) et/ou la deuxième section de paroi (15) sont réalisées essentiellement en tant que surface d'enveloppe cylindrique ouverte.

8. Dispositif échangeur de chaleur (3) selon l'une quelconque des revendications précédentes, dans lequel au moins un moyen d'écartement (59) est disposé entre la première section de paroi (13) et la deuxième section de paroi (15) et
dans lequel l'au moins un moyen d'écartement (59) est de préférence disposé de telle sorte qu'un fluide qui s'écoule de la première ouverture de connexion (33) à la seconde ouverture de connexion associée (35) décrit des méandres transversalement à la direction longitudinale (L).

9. Dispositif échangeur de chaleur (3) selon l'une quelconque des revendications précédentes, dans lequel la première section de paroi (13), la deuxième section de paroi (15), la troisième section de paroi (17) et la quatrième section de paroi (19) sont réalisées d'une pièce ensemble.

10. Dispositif échangeur de chaleur (3) selon l'une quelconque des revendications précédentes, comprenant en outre au moins un élément protecteur (37), dans lequel l'élément protecteur (37) est fixé avec une région d'extrémité (39a) à la paroi d'échangeur de chaleur (11) et la région d'extrémité (39b) opposée à celle-ci est conçue pour venir en contact avec la conduite d'eaux usées (5).

11. Dispositif échangeur de chaleur (3) selon l'une quelconque des revendications précédentes, comprenant en outre une troisième conduite d'alimentation (41), dans lequel la troisième conduite d'alimentation (41) est de préférence disposée sur la troisième section de paroi (17) ou sur la quatrième section de paroi (19).

12. Dispositif échangeur de chaleur (3) selon la revendication 11, dans lequel la troisième conduite d'alimentation (41) est disposée entre l'élément protecteur (37) et la paroi d'échangeur de chaleur (11).

13. Dispositif échangeur de chaleur (3) selon l'une quelconque des revendications précédentes, dans lequel le dispositif échangeur de chaleur (3) présente dans les régions d'extrémité des configurations de raccord (59) pour le raccord étanche et résistant à la traction d'un ou plusieurs autres dispositifs échangeurs de chaleur (3).

14. Dispositif échangeur de chaleur (3) selon l'une quelconque des revendications précédentes, dans lequel un manchon (45) est réalisé au niveau des régions d'extrémité de la première conduite d'alimentation (25) et/ou de la deuxième conduite d'alimentation (27) et/ou de la troisième conduite d'alimentation (41).

15. Utilisation d'au moins un dispositif échangeur de chaleur (3) selon l'une quelconque des revendications 1 à 14 pour la réalisation d'un agencement d'échangeur de chaleur (1),
- dans laquelle le dispositif échangeur de chaleur (3) est introduit ultérieurement dans une conduite d'eaux usées existante (5),
- dans laquelle la première conduite d'alimentation (25) est reliée à une conduite d'aller (51),
- dans laquelle la deuxième conduite d'alimentation (27) est reliée à une conduite de retour (53) et
- dans laquelle la conduite d'aller (51) et la conduite de retour (53) sont reliées de manière hydraulique à une pompe à chaleur (57).
